# EUROPEAN PATENT APPLICATION

(11) **EP 4 390 112 A1**
(43) Date of publication of application: **26.06.2024**
(21) Application number: 22215989.9
(22) Date of filing: 22.12.2022
(51) Int. Cl.: F03D 1/06

(54) **MULTILAYER LEADING EDGE PROTECTION FOR A WIND TURBINE BLADE**

(71) Applicant: LM Wind Power A/S, 6000 Kolding (DK)
(72) Inventor: BEHMER, Harald, Eastleigh, SO53 4SE (GB); ASHOURI VAJARI, Danial, 6000 Kolding (DK)
(74) Representative: COPA Copenhagen Patents

(57) **Abstract**

Disclosed is a wind turbine blade extending from a root to a tip. The wind turbine blade comprises a root region and an airfoil region comprising the tip, a pressure side, a suction side and a chord line extending between a leading edge and a trailing edge. The wind turbine blade comprises a leading edge protection element. The leading edge protection element is arranged at the leading edge of the wind turbine blade so as to form an exterior surface at the leading edge of the wind turbine blade. The leading edge protection element comprises a first layer made of a first material provided with an added pigment material, wherein the added pigment material has a first content by weight defined as the weight of the added pigment material divided by the weight of the first layer. The leading edge protection element comprises at least one second layer made of a second material provided with or without an added pigment material, wherein the added pigment material has a second content by weight defined as the weight of the added pigment material divided by the weight of the at least one second layer. The second content by weight is smaller than the first content by weight. The at least one second layer is arranged nearer the exterior surface of the blade than the first layer.

## Description

The present disclosure relates to wind turbine blades and manufacture of wind turbine blades. More specifically, the present disclosure pertains to the field of protection of wind turbine blades, such as protection of the leading edge of wind turbine blades.

### BACKGROUND

As wind turbines increase in size, wind turbine blades increase in length which means that tip speed of the wind turbine blades increases. Furthermore, for wind turbines located offshore, noise may be less of a concern, meaning that a higher tip speed of the wind turbine blades may be allowed. Thus, large wind turbine blades, especially for offshore use, often have to withstand a higher velocity and thus need to be more robust. During rotation with higher velocities, the airfoil, especially at the leading edge, is subject to increased wear caused by impact with particles or rain drops in the air. To reduce the wear on the leading edge there is a need for a robust material on the wind turbine blade, and especially the leading edge. Thus, leading edge protection elements have been used in the field of wind turbine blade protection to protect the blades, especially at the leading edge. Improvement in the robustness of the wind turbine blade may further prolong the life span of the individual wind turbine blades, in addition to a higher energy yield due to a higher rotation velocity during operation of the wind turbine blades.

In addition, during the manufacturing process, e.g. during manufacturing of the leading edge protection element or during manufacturing of the wind turbine blade comprising a leading edge protection element, small defects or imperfections, such as bubbles or cracks, may occur in the leading edge protection element. Defects may occur more frequently in pigmented materials used in manufacturing of leading edge protection elements than non-pigmented or transparent materials. Defects may occur during manufacturing when using a coextrusion process. These defects may reduce the life span of the leading edge protection element and consequently the life span of the wind turbine blade or the time between required repairs. However, a leading edge protection element of a pigmented material provides a more homogeneous colour of the wind turbine blade and protects the blade against ultraviolet (UV) damages. Accordingly, pigmented material is desirable for protection of the leading edge of the wind turbine blade.

Thus, there is a need for a leading edge protection element which protects the wind turbine blade during the life span of the blade and lower the risk of defects in the leading edge protection element causing down time for repairing the leading edge protection element.

### SUMMARY OF THE INVENTION

It is an object of the present disclosure to provide a leading edge protection element of a wind turbine blade which overcomes at least some of the disadvantages of the prior art.

Thus, the present invention relates to a wind turbine blade extending from a root to a tip. The wind turbine blade comprises a root region and an airfoil region comprising the tip, a pressure side, a suction side and a chord line extending between a leading edge and a trailing edge. The wind turbine blade comprises a leading edge protection element. The leading edge protection element is arranged at the leading edge of the wind turbine blade so as to form an exterior surface at the leading edge of the wind turbine blade. The leading edge protection element comprises a first layer made of a first material provided with an added pigment material, wherein the added pigment material has a first content by weight defined as the weight of the added pigment material divided by the weight of the first layer. The leading edge protection element comprises at least one second layer made of a second material provided with or without an added pigment material, wherein the added pigment material has a second content by weight defined as the weight of the added pigment material divided by the weight of the at least one second layer. The second content by weight is smaller than the first content by weight. The at least one second layer is arranged nearer the exterior surface of the blade than the first layer.

It is an advantage of the present disclosure that a better protection of a wind turbine blade is provided due to the robust leading edge protection element. It is a further advantage of the present disclosure that a leading edge protection element is less prone to defects due to the material used and the multiple layers. Particularly, the material of second layer provides a layer less prone to imperfections during manufacturing of the leading edge protection element due to having less or even no pigment material, whereas the first layer, which comprises more pigment material is protected by the one or more second layers. Furthermore, multiple layers of the leading edge protection element reduces the size of potential imperfections and thus the risk of a throughgoing imperfection occurring is reduced, which in turn increases the robustness and life span of the wind turbine blade.

The added pigmented material may comprise one type of material or a combination of more than one type of material. The added pigmented material may undergo a chemical or physical alteration during and/or after incorporation in the first layer and/or the second layer. Alternatively, the added pigmented material may not undergo any chemical or physical alteration during and/or after incorporation in the first layer and/or the second layer. The chemical or physical alteration may occur naturally and/or as a reaction to a treatment of the material. The added pigmented material may be organic, inorganic or a combination of both. The added pigmented material may comprise a polymer. The added pigmented material may be chosen from the group of acrylates, cyanines, quinones, azo pigments, oxides, carbon black, titanium oxides, iron oxides.

The first layer may be an innermost layer of the leading edge protection element. Other layers, such as a underneath or beneath the leading edge protection element, such as underneath or beneath the innermost layer of the leading edge protection element, such as underneath or beneath the first layer. The fibre-reinforced plastic layers may be a part of the blade shell parts. The leading edge protection element may comprise an additional second layer layer made of a second material provided with or without an added pigment material, wherein the added pigment material has a second content by weight defined as the weight of the added pigment material divided by the weight of the at least one second layer, which may be arranged underneath or beneath the leading edge protection element. The other layers or additional second layer may alternatively be a part of the leading edge protection element.

The leading edge protection element may comprise an inner surface, e.g., a surface facing at least a blade shell part of the wind turbine blade, and an outer surface, e.g., a surface defining an exterior surface of the wind turbine blade. The inner surface may be formed by the first layer. The outer surface may be formed by at least a second layer.

The first layer may be arranged between the at least one second layer and at least one blade shell part of the wind turbine blade. An attachment layer may be arranged between the first layer and at least a blade shell part of the wind turbine blade. The attachment layer may comprise a pressure sensitive adhesive.

The first layer and the at least one second layer may be bonded to each other, e.g., using heat. Preferably, the first layer and/or the at least one second layer are formed as a co-extruded element. The first layer and the at least one second layer may be co-extruded. The first layer and the second layer may be bonded to each other during the co-extrusion while the layers are heated. Alternatively, the first layer and the at least one second layer may be bonded to each other while the first layer and/or the second layer are still formable, e.g., hot or warm.

The leading edge protection element may comprise a plurality of first layers.

The first layer and at least one second layer may be made from the same material. In other words, the first material and the second material may be the same base material, where the first material has added pigment material, and the second material is provided with or without added pigment material. The first layer and the second layer may be of the same material and have different properties, e.g., the first layer and the second layer may have different elastic modulus.

The first layer and/or the at least one second layer are made of a thermoplastic material. In a preferred embodiment, the first layer and the at least one second layer are made of a thermoplastic material.

The first layer and/or the at least one second layer may be made of an elastomer material, such as a thermoplastic polymer material, e.g., a thermoplastic polyurethane material. In a preferred embodiment the first layer and the at least one second layer are made of a thermoplastic polyurethane material. Polyurethane is a versatile material, which can be tailored to the required needs and be provided both with thermosetting and a thermoplastic. The polyurethane can be pigmented or non-pigmented, the latter of which provides at least a partially transparent material. By using a thermoplastic material, the layers of the leading edge protection element can be co-extruded, which provides a strong multi-layered structure with low risk of impurities or imperfections causing a defect through the entire thickness of the leading edge protection element.

The first layer may comprise a pigmented polyurethane material, and wherein the at least one second layer may comprise a non-pigmented material, such as a transparent or partly transparent, polyurethane material, preferably thermoplastic.

The first content by weight may be 0.1-10% by weight, such as 0.5-5% by weight, such as 1-2% by weight. The pigment material in the first layer may have the same pigmentation colour as the rest of the surface of the wind turbine blade when the leading edge protection element is arranged on the wind turbine blade. The leading edge protection element may have the same pigmentation colour as the rest of the wind turbine blade when the leading edge protection element is arranged on the wind turbine blade.

The second content by weight may be less than 1% by weight, such as 0% by weight. The second layer may be non-pigmented, partly transparent or transparent. The second layer may be less pigmented or more transparent than the first layer. The pigmentation colour of the second layer may be the same or different from the pigmentation colour of the first layer. The pigmentation colour of the second layer may be the same or different from the pigmentation colour of the remainder of the surface of the wind turbine blade.

The first layer may have a first centre thickness, preferably at the leading edge of the blade. The first centre thickness may be between 100-800 µm, such as between 150-500 µm, such as 250 µm.

The leading edge protection element may comprise a plurality of second layers, such as 2-10, such as 2-8, such as 2 or 3 second layers. A plurality of second layers may be provided. The plurality of second layers and the first layer may be co-extruded. The plurality of second layers may be bonded to each other, e.g., using heat or co-extrusion. The plurality of second layers may be provided as a co-extruded element. The plurality of second layers and the first layer may be provided as a co-extruded element.

Each of the plurality of the second layers may have a second centre thickness, preferably at the leading edge of the blade. The second centre thickness may be between 100-500 µm, such as between 150-300 µm, such as 250 µm.

The first layer and/or each of the plurality of second layers may have a uniform thickness. The thicknesses of the plurality of second layers may be consecutively or alternately higher and lower. The thicknesses of each of the plurality of second layers may decrease in the chordwise direction from an inner surface of the leading edge protection element towards an outer surface of the leading edge protection element. The thicknesses of each of the plurality of second layers may increase in the chordwise direction from the inner surface towards the outer surface. Each of the plurality of second layers may have substantially the same thickness.

The first layer and/or the at least one second layer and/or each of the plurality of second layers may have a Shore A hardness between 75-120, such as between 80-100, such as between 85-98. The first layer and/or the at least one second layer may have a Shore A hardness above 80. Each of the plurality of second layers may have a Shore A hardness different from each other. Each of the plurality of second layers may have consecutively or alternately mutually lower and higher Shore A hardness. Each of plurality of second layers may have substantially the same Shore A hardness.

The Shore A hardness of each of the plurality of second layers may increase from an inner surface of the leading edge protection element towards an outer surface of the leading edge protection element. An inner layer with a lower Shore A hardness may be configured as a damper. An outer layer with a higher Shore A hardness may provide an improved impact resistance.

The Shore A hardness of each of the plurality of second layers may decrease from an inner surface of the leading edge protection element towards an outer surface of the leading edge protection element.

From the above, it is seen that the hardness or flexibility of the various layers can be tailored to the required needs. An inner layer may for instance have a larger flexibility in order to provide damping or absorption, whereas an outer layer may have a larger hardness in order to improve impact resistance.

The at least one second layer and/or first layer may be configured to function as shedable layers.

The leading edge protection element may comprise a centre thickness at the leading edge of the blade. The centre thickness may be between 250-5000 µm, such as between 500-4000 µm, such as 750 or 1500 µm.

The leading edge protection element may have a uniform thickness. In a preferred embodiment the first layer and the at least one second layer may have a uniform thickness, so that the leading edge protection element provided after co-extrusion of the two layers has a uniform thickness.

In an alternative embodiment, the leading edge protection element may taper or be chamfered in thickness in a first part extending on the pressure side of the wind turbine blade and/or may taper or be chamfered in thickness in a second part extending on the pressure side of the wind turbine blade.

The thickness of the leading edge protection element may decrease, e.g., by chamfering towards any or all of the edges, e.g., to provide for a smooth transition to the surface whereon the leading edge protection element is arranged on the wind turbine blade. The thickness between the inner surface and the outer surface of the leading edge protection element may decrease along the transverse direction towards the third edge and/or towards the fourth edge, e.g., the leading edge protection element is tapered towards the third edge and/or towards the fourth edge such that the transition from the leading edge protection element to the airfoil is minimal. The thickness between the inner surface and the outer surface of the leading edge protection element may decrease along the longitudinal direction towards the first edge and/or towards the second edge, e.g., the leading edge protection element is tapered towards the first edge and/or towards the second edge.

The first part and/or the second part may taper or be chamfered to a thickness being at most 0.5 mm, i.e., the thickness of the leading edge protection element at the third edge and/or fourth edge is 0.5 mm or less.

Also disclosed is a method for manufacturing a leading edge protection element for a wind turbine blade. The method comprises providing a first layer made of a first material provided with an added pigment material, wherein the added pigment material has a first content by weight defined as the weight of the added pigment material divided by the weight of the first layer. The method comprises providing at least one second layer made of a second material provided with or without an added pigment material, wherein the added pigment material has a second content by weight defined as the weight of the added pigment material divided by the weight of the at least one second layer. The second content by weight is smaller than the first content by weight. The first layer and/or the at least one second layer are manufactured using an extrusion process. The method further comprises bonding the first layer and the at least one second layer using heat.

Also disclosed is a method for protecting a leading edge of a wind turbine blade. The wind turbine blade extends from a root to a tip. The wind turbine blade comprises a root region, and an airfoil region comprising the tip, a pressure side, a suction side and a chord line extending between the leading edge and a trailing edge. The method comprises providing a wind turbine blade. The method comprises providing a leading edge protection element having the characteristics as disclosed above. The method comprises bonding the leading edge protection element to the leading edge of the wind turbine blade.

The leading edge protection element may be bonded to at least a blade shell part of the wind turbine blade using co-infusion. The leading edge protection element may be bonded to the wind turbine blades, e.g., the blade shell parts using co-infusion. After co-infusing the leading edge protection element and the blade shell parts, the leading edge protection element may form the exterior surface of the wind turbine blade at the leading edge. Alternatively, a resin from the co-infusion process may form at least part of the exterior surface of the wind turbine blade at the leading edge.

The leading edge protection element and the shell material may be infused with a resin and the resin subsequently be cured. Vacuum assisted resin transfer moulding (VARTM) may be applied. Alternatively, the shell material may be pre-impregnated, e.g., the shell material may comprise a pre-preg fibre glass material. The leading edge protection element and the pre-preg material may be consolidated under pressure to form the leading edge. Optionally, heat may be applied during consolidation.

The leading edge protection element may be bonded to at least a blade shell part of the wind turbine blade using heat. The leading edge protection element may be bonded to at least a blade shell part of the wind turbine blade using a pressure sensitive adhesive.

Also disclosed is a leading edge protection element configured to be arranged at a leading edge of a wind turbine blade so as to form an exterior surface of the leading edge of the wind turbine blade. The leading edge element comprises a first layer made of a first material provided with an added pigment material, wherein the added pigment material has a first content by weight defined as the weight of the added pigment material divided by the weight of the first layer. The leading edge element comprises at least one second layer made of a second material provided with or without an added pigment material, wherein the added pigment material has a second content by weight defined as the weight of the added pigment material divided by the weight of the at least one second layer. The second content by weight is smaller than the first content by weight. The at least one second layer is configured to be arranged nearer the exterior surface of the blade than the first layer.

The leading edge protection element may have the form of a tape or a film. The leading edge protection element may be provided as a preformed element. The leading edge protection element may be provided as a film. The leading edge protection element may be provided coiled on a roll. The leading edge protection element may be cut to the desired length, e.g., between 10-100 m, such as between 15-70 m, such as between 20-50 m, such as 30 m.

The leading edge protection element according to the present disclosure may be provided in length longer than the length of a single wind turbine blade and may be cut to desired lengths. The length of the leading edge protection element in the longitudinal direction, e.g., the distance between the first edge and the second edge, may be longer than the length of the leading edge of the wind turbine blade. For example, the length of the leading edge protection element may be more than 100 m, such as more than 200 m, such as more than 300 m.

The length of the leading edge protection element in the longitudinal direction, e.g., the distance between the first edge and the second edge, may be the same as the length of the leading edge of the wind turbine blade. Alternatively, the length may be smaller than the length of the leading edge of the wind turbine blade. The leading edge protection element may extend in the longitudinal direction starting from the tip or near the tip.

The width of the leading edge protection element, such as the first leading edge protection element and/or the second leading edge protection element, in the transverse direction may be between 40-500 mm, e.g., between 50-400 mm, e.g., between 50-100 mm or between 200-400 mm. The leading edge protection element may extend in the transverse direction across the leading edge of the wind turbine blade, e.g., the intersection between the suction side and the pressure side of the wind turbine blade.

It is envisaged that any embodiments or elements as described in connection with any one aspect may be used with any other aspects or embodiments, mutatis mutandis.

### BRIEF DESCRIPTION OF THE FIGURES

Embodiments of the invention will be described in more detail in the following with regard to the accompanying figures. Like reference numerals refer to like elements throughout. Like elements may, thus, not be described in detail with respect to the description of each figure. The figures show one way of implementing the present invention and are not to be construed as being limiting to other possible embodiments falling within the scope of the attached claim set. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.
Fig. 1 is a schematic diagram illustrating an exemplary wind turbine,
Fig. 2 is a schematic diagram illustrating an exemplary wind turbine blade,
Fig. 3 is a schematic diagram illustrating a cross sectional view of an exemplary wind turbine blade,
Fig. 4 is schematic diagram illustrating an exemplary leading edge,
Fig. 5 is schematic diagram illustrating an exemplary leading edge protection element, and
Fig. 6 is schematic diagram illustrating an exemplary method of manufacturing a leading edge protection element.

### DETAILED DESCRIPTION

In the following figure description, the same reference numbers refer to the same elements and may thus not be described in relation to all figures.

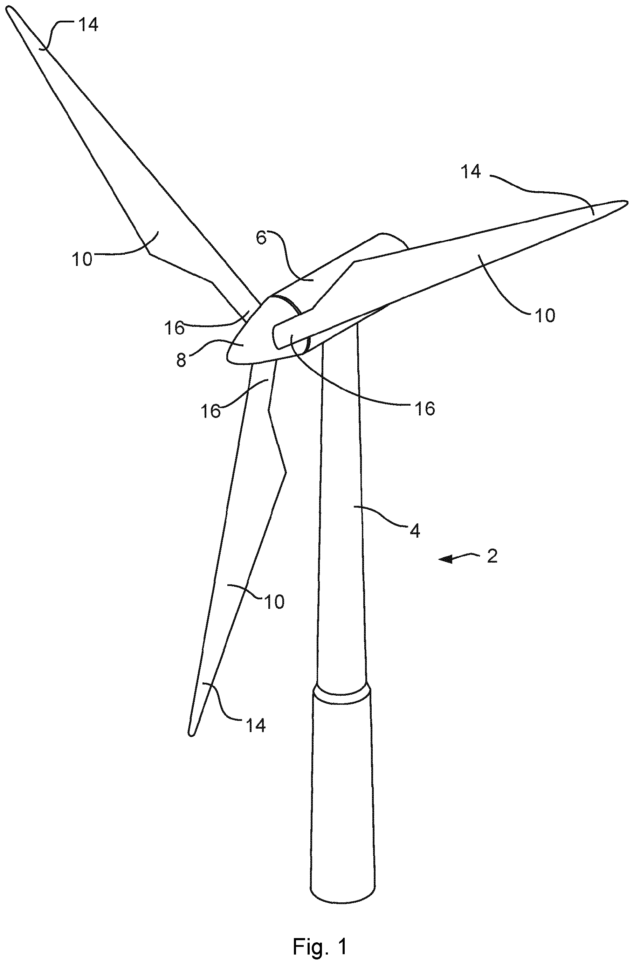

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

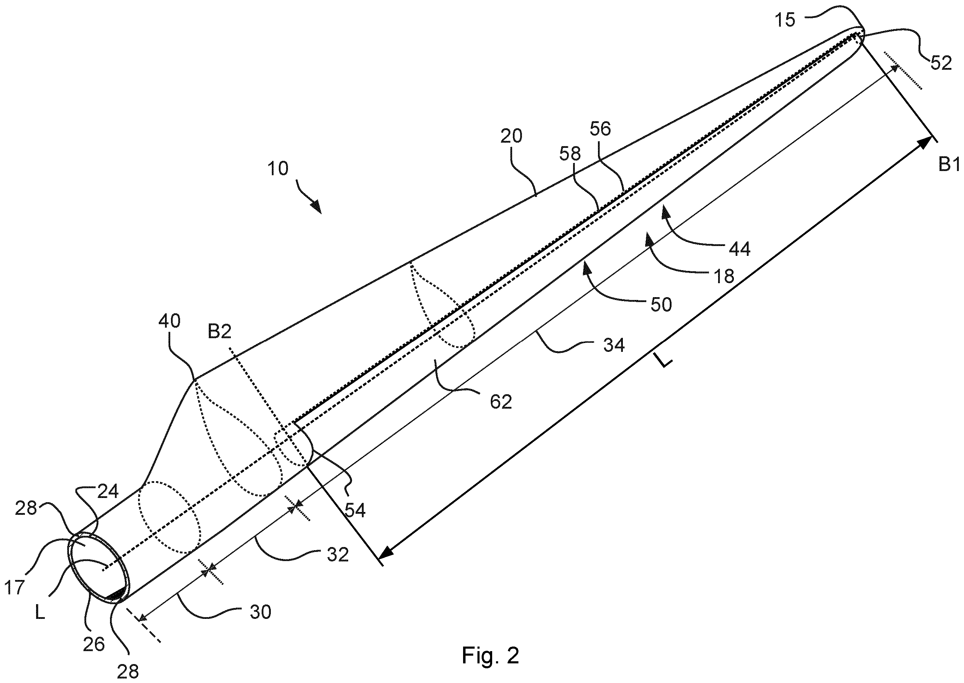

Fig. 2 shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e., pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts or half shells, a first blade shell part 24 and a second blade shell part 26, typically made of fibre-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular or semi-oval outer cross-sectional shape.

The wind turbine blade 10 comprises a leading edge protection element 50 on the leading edge 18 of the wind turbine blade 10. The leading edge protection element 50 extends in a longitudinal direction between a first edge 52 and a second edge 54 and extends in a transverse direction between a third edge 56 and a fourth edge 58. The longitudinal direction of the leading edge protection element 50 may be parallel to the longitudinal direction of the wind turbine blade 10. The leading edge protection element 50 extends from a first blade position B1, at the tip 15 or near the tip 15, to a second blade position B2 closer to the root end 17. The length L of the leading edge protection element 50, e.g., the distance between the first edge 52 and the second edge 54, may be the same as the length of the leading edge 18 of the wind turbine blade 10, such that the leading edge protection element 50 extends along the length of the blade 10. However, the length L may be smaller than the length of the leading edge 18 of the wind turbine blade 10, such that the leading edge protection element 50 extends only along part of the blade 10, as illustrated. The leading edge protection element 50 has an inner surface 60 and an outer surface 62. The inner surface 60 of the leading edge protection element faces the leading edge 18 of the wind turbine blade.

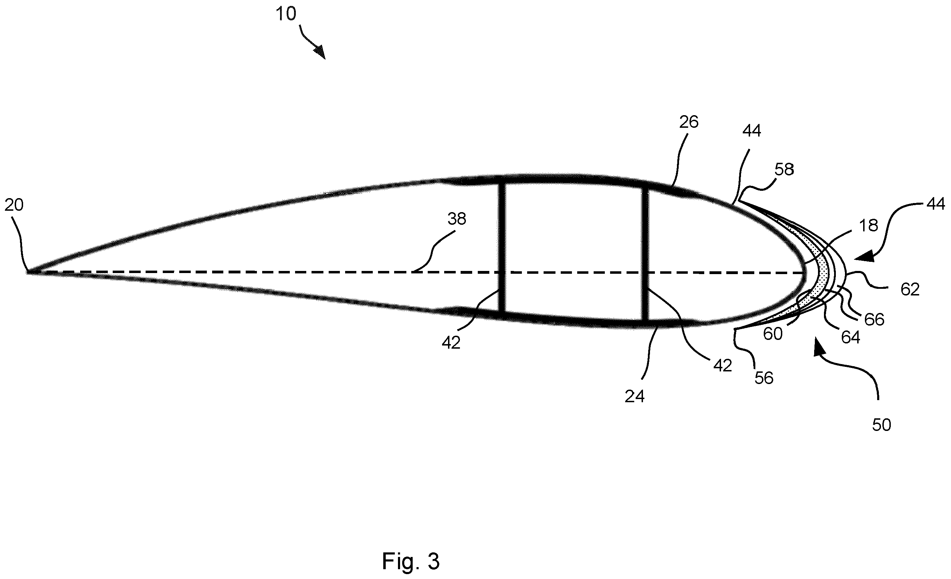

Fig. 3 is a schematic diagram illustrating a cross sectional view of an exemplary wind turbine blade 10, e.g., a cross sectional view of the airfoil region of the wind turbine blade 10. The wind turbine blade 10 comprises a leading edge 18, a trailing edge 20, a pressure side 24 and a suction side 26. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The shell parts 24, 26 may comprise glass fibres or carbon fibres.

The wind turbine blade 10 may be protected by providing a leading edge protection element 50, such as the leading edge protection element 50 of Figs. 2-3. For illustrative purposes, the leading edge protection element 50 is illustrated spaced apart from the leading edge 18 of the wind turbine blade 10. However, in a final product, the leading edge protection element 50 and the wind turbine blade 10 are attached to each other, or the leading edge protection element is embedded in the blade shell, e.g., by co-infusion.

The leading edge protection element 50 may be attached to the leading edge 18 of the wind turbine blade 10 by orienting the leading edge protection element 50 such that the inner surface 60 faces the leading edge 18 of the wind turbine blade 10 so as to form an exterior surface 44 of the wind turbine blade 10. The leading edge protection element 50 may be attached by applying an adhesive, e.g., a pressure sensitive adhesive or a two component adhesive and/or a heat activated adhesive, and/or mechanical or chemical bonding. The adhesive may be applied on the inner surface 60 of the leading edge protection element 50 or on the leading edge 18 of the wind turbine blade 10. Alternatively, the shell material 24, 26 of the wind turbine blade and the leading edge protection element 50 may be consolidated, e.g., by infusing the shell material 24, 26 and the leading edge protection element 50 with a resin and curing the resin. Vacuum assisted resin transfer moulding (VARTM) may be applied. After co-infusion, the wind turbine blade 10 comprising the leading edge protection element 50 may have an outermost layer of resin.

The third edge 56 and the fourth edge 58 may extend substantially parallel to the longitudinal direction of the wind turbine blade when the leading edge protection element 50 is arranged and attached to the leading edge 18 of the wind turbine blade 10. The third edge 56 and the fourth edge 58 may in such an embodiment be tapered or chamfered such that the transition in height to the airfoil surface is minimal.

The leading edge protection element 50 comprises a first layer 64 and at least one second layer 66, which is described in more detail in below.

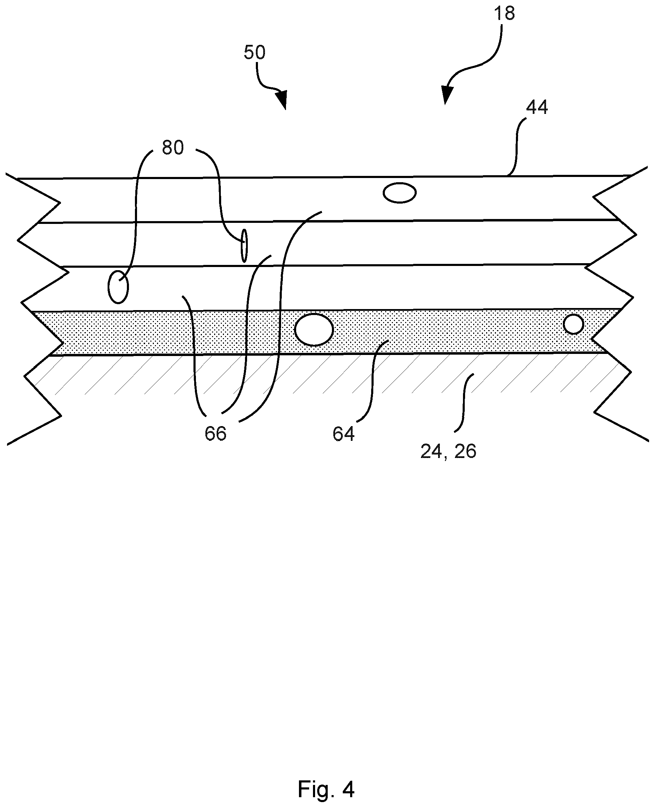

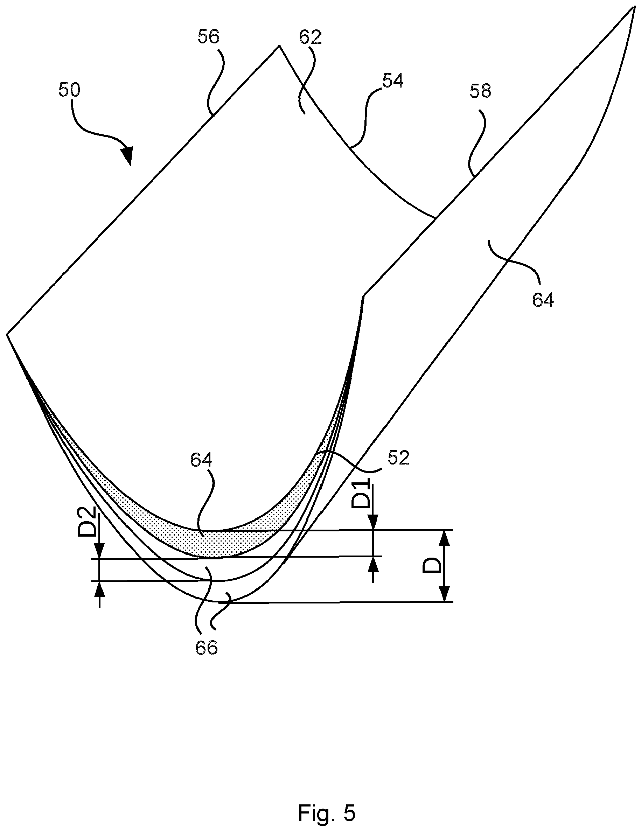

Figs. 4-5 are schematic diagrams illustrating a leading edge protection element 50. Fig. 4 is a schematic diagram illustrating a cross sectional view of a leading edge of a wind turbine blade and a leading edge protection element, such as the leading edge 18 and leading edge protection element 50 of the previous figures. Fig. 5 is a schematic diagram illustrating a leading edge protection element 50, such as the leading edge protection element 50 of Figs. 2-4.

The leading edge protection element 50 comprises a first layer 64 and at least one second layer 66, such as one second layer 66 or two second layers 66 (see Fig. 5) or three second layers (see Fig. 4). The first layer 64 is made of a first material provided with an added pigment material with a first content by weight, as illustrated with the dotted pattern. The second layer 66 is made of a second material provided with or without an added pigment material with a second content by weight. The content by weight is defined as the weight of the added pigment material divided by the weight of the first layer or the second layer. The second content by weight is smaller than the first content by weight, whereby the second layer 66 comprises less pigment material than the first layer 64. The first layer 64 comprising more pigment material is arranged closer to the blade shells 24, 26 of the wind turbine blade. The second layer 66 comprising less pigment material is arranged nearer to the exterior surface 44 of the wind turbine blade 10 than the first layer 64. The second layer 66 may comprise no pigmented material, e.g., the second layer 66 may be transparent. The first layer 64 provides a colour to the leading edge of the wind turbine blade 10. The colour is preferably the same as the colour of the surface of the rest of the wind turbine blade 10. The first layer 64 also protects the leading edge 18 against damages caused by UV light due to the pigment material.

The first layer 64 and the second layer 66 may be made of the same material, such as a thermoplastic material, such as a thermoplastic elastomeric material, such as thermoplastic polyurethane. The first layer 64 and the second layer(s) 66 are bonded to each other, such as through heat extrusion, such as through co-extrusion, such as through co-extrusion with heat.

Fig. 4 further illustrates the imperfections 80, such as cracks or bubbles that may arise during manufacturing of the leading edge protection element 50. Imperfections are more prone to occur in materials with a higher content by weight of pigmented material than materials with a lower or zero content by weight of pigmented material. By providing a leading edge protection element 50 comprising a plurality of layers 64, 66, the risk of having large imperfections 80 which extends substantially through the thickness of leading edge protection element 50, e.g., from the exterior surface 44 to the blade shell parts 24, 26, is reduced, because the possible imperfection is likely only found in a single layer. Furthermore, the provision of at least one second layer 66 with lower or zero content by weight of pigmented material reduces the occurrences of imperfections 80 in the leading edge protection element 50 in general, e.g., such that risk of having imperfections 80 extend from the first layer 64 to the at least second layer 66 is reduced. By building up the leading edge protection element 50 of several layers, the possible occurrences of imperfections 80 are restricted to single layers in the structure.

Fig. 5 further illustrates a leading edge protection element 50 extending in a longitudinal direction between a first edge 52 and a second edge 54 and in a transverse direction between a third edge 56 and a fourth edge 58.

The leading edge protection element has a thickness D between the inner surface 60 and the outer surface 62, preferably at the leading edge when the leading edge protection element 50 is arranged on a wind turbine blade. The centre thickness D decreases along the transverse direction towards the edges 56, 58. The first layer 64 has a first centre thickness D1 and the second layer(s) 66 has a second centre thickness D2, preferably at the leading edge when the leading edge protection element 50 is arranged on a wind turbine blade. The centre thickness D1 or D2 may decrease along the transverse direction towards the edges 56, 58.

The second centre thickness D2 of each of the second layers 66 may be the same. The second centre thickness D2 of each of the second layers 66 may be different from each other. For example, the second centre thickness D2 of each of the second layers 66 may alternately be higher and lower, such that every other second layer 66 has a relatively large thickness and every other second layer 66 has a relatively small thickness. Alternatively, the thickness of consecutive second layers 66 may increase or decrease from the inner surface 60 towards the outer surface 62, i.e., in the chordwise direction.

Furthermore, the Shore A hardness of each of the second layers 66 may be the same. The Shore A hardness of each of the second layers 66 may be different from each other. For example, the Shore A hardness of each of the second layers 66 may alternately be higher and lower, such that every other second layer 66 has a relatively large hardness and every other second layer 66 has a relatively small hardness. Alternatively, the Shore A hardness of consecutive second layers 66 may increase or decrease from the inner surface 60 towards the outer surface 62, i.e., in the chordwise direction.

The leading edge protection element 50 may be provided coiled on a roll, for easier handling and storage.

While the layers and element in the shown embodiments are being tapered or chamfered towards the edges 56, 58, it is recognised that the layers and element may also have a uniform thickness. Accordingly, a leading edge protection element manufactured using co-extrusion may subsequently undergo a tapering or chamfering process.

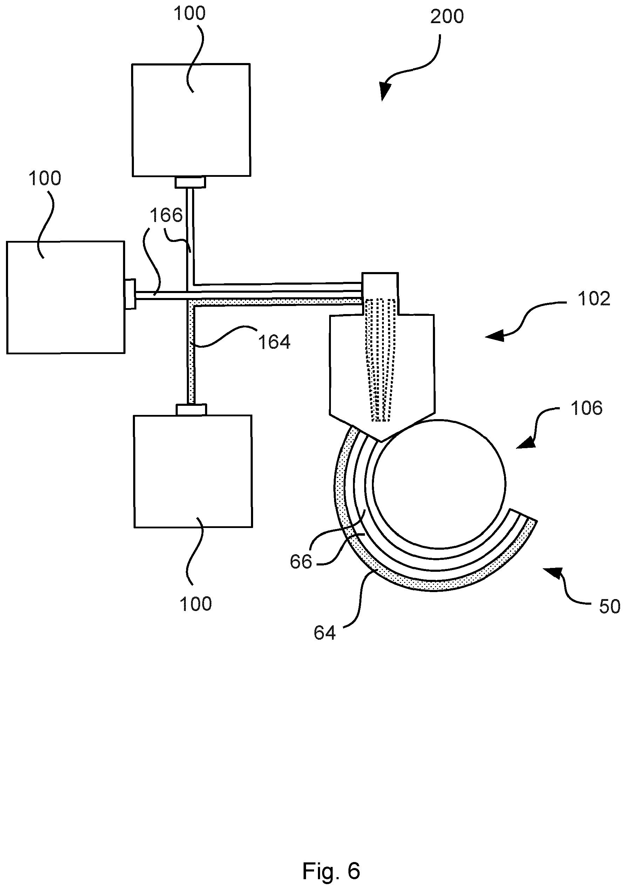

Fig. 6 is a schematic diagram illustrating an exemplary method 200 of manufacturing a leading edge protection element, such as the leading edge protection element 50 of the previous figures. The method 200 comprises providing raw material of a first layer 164 and providing raw material of at least one second layer 166, such as providing raw material for two separate second layers 166. Each of the raw materials 164, 166 are provided in an extruder 100 and fed via pipes to a multi-manifold extrusion die 102 where the raw materials 164, 166 are co-extruded. The leading edge protection element 50 exits the die 102 in the form of a film or a tape to be cooled off on a cooling roll 106. It is recognised that other co-extrusion setups can also be used.

### ITEMS

Exemplary embodiments of the present disclosure are set out in the following items:
1. A wind turbine blade extending from a root to a tip, the wind turbine blade comprising a root region, and an airfoil region comprising the tip, a pressure side, a suction side and a chord line extending between a leading edge and a trailing edge, the wind turbine blade comprising a leading edge protection element,
   wherein the leading edge protection element is arranged at the leading edge of the wind turbine blade so as to form an exterior surface at the leading edge of the wind turbine blade, wherein the leading edge protection element comprises:
      - a first layer made of a first material provided with an added pigment material, wherein the added pigment material has a first content by weight defined as the weight of the added pigment material divided by the weight of the first layer, and
      - at least one second layer made of a second material provided with or without an added pigment material, wherein the added pigment material has a second content by weight defined as the weight of the added pigment material divided by the weight of the at least one second layer,
   wherein the second content by weight is smaller than the first content by weight, and wherein the at least one second layer is arranged nearer the exterior surface of the blade than the first layer.
2. Wind turbine blade according to item 1, wherein the first layer is an innermost layer of the leading edge protection element.
3. Wind turbine blade according to any of the preceding items, wherein the first content by weight is 0.1-10% by weight, such as 0.5-5% by weight, such as 1-2% by weight.
4. Wind turbine blade according to any of the preceding items, wherein the second content by weight is less than 1% by weight, such as 0% by weight.
5. Wind turbine blade according to any of the preceding items, wherein the first layer is arranged between the at least one second layer and at least a blade shell part of the wind turbine blade.
6. Wind turbine blade according to any of the preceding items, wherein an attachment layer is arranged between the first layer and at least a blade shell part of the wind turbine blade.
7. Wind turbine blade according to item 5, wherein the attachment layer comprises a pressure sensitive adhesive.
8. Wind turbine blade according to any of the preceding items, wherein the first layer and the at least one second layer are bonded to each other, e.g., using heat.
9. Wind turbine blade according to any of the preceding items wherein the leading edge protection element comprises a plurality of first layers.
10. Wind turbine blade according to any of the preceding items, wherein the first layer and at least one second layer are made from the same material.
11. Wind turbine blade according to any of the preceding items, wherein the first layer and/or the at least one second layer are made of a thermoplastic material.
12. Wind turbine blade according to any of the preceding items, wherein the first layer and/or the at least one second layer are formed as a co-extruded element.
13. Wind turbine blade according to any of the preceding items, wherein the first layer and/or the at least one second layer are made of an elastomer material, such as a thermoplastic polymer material, e.g., a thermoplastic polyurethane material.
14. Wind turbine blade according to any of the preceding items, wherein the first layer comprises a pigmented polyurethane material, and wherein the at least one second layer comprises a non-pigmented material, such as transparent, polyurethane material, preferably thermoplastic.
15. Wind turbine blade according to any of the preceding items, wherein the leading edge protection element has the form of a tape or a film.
16. Wind turbine blade according to any of the preceding items, wherein the first layer has a first centre thickness, preferably at the leading edge of the blade, and wherein said first centre thickness is between 100-500 µm, such as between 150-300 µm, such as 250 µm.
17. Wind turbine blade according to any of the preceding items wherein the leading edge protection element comprises a plurality of second layers, such as 2-10, such as 2-8, such as 2 or 3 second layers.
18. Wind turbine blade according to any of the preceding items, wherein each of the plurality of the second layers has a second centre thickness, preferably at the leading edge of the blade, and wherein said second centre thickness is between 100-500 µm, such as between 150-300 µm, such as 250 µm.
19. Wind turbine blade according to any of the preceding items, wherein the first layer and/or each of the plurality of second layers have a uniform thickness.
20. Wind turbine blade according to item 19, wherein the plurality of second layers is bonded to each other, e.g., using heat or co-extrusion.
21. Wind turbine blade according to any of the items 19-20, wherein the thicknesses of the plurality of second layers are consecutively or alternately higher and lower.
22. Wind turbine blade according to any of the items 19-21, wherein the thicknesses of each of the plurality of second layers decrease in the chordwise direction from an inner surface of the leading edge protection element towards an outer surface of the leading edge protection element.
23. Wind turbine blade according to any of the items 19-22, wherein the thicknesses of each of the plurality of second layers increase in the chordwise direction from an inner surface of the leading edge protection element towards an outer surface of the leading edge protection element.
24. Wind turbine blade according to any of the items 19-23, wherein each of the plurality of second layers has substantially the same thickness.
25. Wind turbine blade according to any of the preceding items, wherein the first layer and/or the at least one second layer have a Shore A hardness between 75-120, such as between 80-100, such as between 85-98.
26. Wind turbine blade according to any of the items 19-25, wherein each of the plurality of second layers has a Shore A hardness different from each other.
27. Wind turbine blade according to any of the items 19-26, wherein each of the plurality of second layers have consecutively or alternately mutually lower and higher Shore A hardness.
28. Wind turbine blade according to any of the items 19-27, wherein each of the plurality of second layers has substantially the same Shore A hardness.
29. Wind turbine blade according to any of the items 19-28, wherein the Shore A hardness of each of plurality of second layers increases from an inner surface of the leading edge protection element towards an outer surface of the leading edge protection element.
30. Wind turbine blade according to any of the items 19-29, wherein the Shore A hardness of each of plurality of second layers decreases from an inner surface of the leading edge protection element towards an outer surface of the leading edge protection element.
31. Wind turbine blade according to any of the preceding items, wherein the at least one second layer and/or first layer are configured to function as shedable layers.
32. Wind turbine blade according to any of the preceding items, wherein the leading edge protection element comprises a centre thickness at the leading edge of the blade, wherein the centre thickness is between 250-5000 µm, such as between 500-4000 µm, such as 750 or 1500 µm.
33. Wind turbine blade according to any of the preceding items, wherein the leading edge protection element has a uniform thickness.
34. Wind turbine blade according to any of the preceding items, wherein the leading edge protection element tapers or is chamfered in thickness in a first part extending on the pressure side of the wind turbine blade and/or tapers or is chamfered in thickness in a second part extending on the pressure side of the wind turbine blade.
35. Wind turbine blade according to item 34, wherein the first part and/or the second part tapers or is chamfered to a thickness being at most 0.5 mm.
36. A method for manufacturing a leading edge protection element for a wind turbine blade, the method comprising:
   - providing a first layer made of a first material provided with an added pigment material, wherein the added pigment material has a first content by weight defined as the weight of the added pigment material divided by the weight of the first layer,
   - providing at least one second layer made of a second material provided with or without an added pigment material, wherein the added pigment material has a second content by weight defined as the weight of the added pigment material divided by the weight of the at least one second layer,
   wherein the second content by weight is smaller than the first content by weight, and
   wherein the first layer and/or the at least one second layer are manufactured using an extrusion process,
   the method further comprising:
   - bonding the first layer and the at least one second layer using heat.
37. Method according to item 36, wherein the first layer and the at least one second layer are co-extruded.
38. Method according to item 36 comprising providing a plurality of second layers and coextruding the plurality of second layers and the first layer.
39. A method for protecting a leading edge of a wind turbine blade,
   wherein the wind turbine blade extends from a root to a tip, and comprising a root region, and an airfoil region comprising the tip, a pressure side, a suction side and a chord line extending between the leading edge and a trailing edge,
   the method comprising:
   - providing a wind turbine blade,
   - providing a leading edge protection element having the characteristics of any of the items 1-35,
   - bonding the leading edge protection element to the leading edge of the wind turbine blade.
40. Method according to item 39, wherein the leading edge protection element is bonded to at least a blade shell part of the wind turbine blade using heat.
41. Method according to item 39, wherein the leading edge protection element is bonded to at least a blade shell part of the wind turbine blade using a pressure sensitive adhesive.
42. Method according to item 39, wherein the leading edge protection element is bonded to at least a blade shell part of the wind turbine blade using co-infusion.
43. A leading edge protection element configured to be arranged at a leading edge of a wind turbine blade so as to form an exterior surface of the leading edge of the wind turbine blade, wherein the leading edge element comprises:
   - a first layer made of a first material provided with an added pigment material, wherein the added pigment material has a first content by weight defined as the weight of the added pigment material divided by the weight of the first layer, and
   - at least one second layer made of a second material provided with or without an added pigment material, wherein the added pigment material has a second content by weight defined as the weight of the added pigment material divided by the weight of the at least one second layer,
   wherein the second content by weight is smaller than the first content by weight, and
   wherein the at least one second layer is configured to be arranged nearer the exterior surface of the blade than the first layer.
44. Leading edge protection element according to item 43 provided as a preformed element.
45. Leading edge protection element according to item 43 provided as a film.

### LIST OF REFERENCES

- 2: wind turbine
- 4: tower
- 6: nacelle
- 8: hub
- 10: blade
- 12: blade part
- 14: blade tip
- 15: tip end
- 16: blade root
- 17: root end
- 18: leading edge
- 20: trailing edge
- 24: first blade shell part (pressure side)
- 25: leading part of pressure side
- 26: second blade shell part (suction side)
- 28: bond lines/glue joints
- 30: root region
- 32: transition region
- 34: airfoil region
- 38: chord line
- 40: shoulder
- 42: shear web or spar side
- 44: exterior surface
- 50: leading edge protection element
- 52: first edge
- 54: second edge
- 56: third edge
- 58: fourth edge
- 60: inner surface
- 62: outer surface
- 64: first layer
- 66: second layer(s)
- 80: defects/imperfections
- 100: extruder
- 102: multi-manifold extrusion die
- 106: cooling roll
- 102: extrusion process
- 164: raw material of first layer
- 166: raw material of second layer(s)
- 200: method of manufacturing
- L: length of first leading edge protection element
- D: centre thickness leading edge protection element
- D1: centre thickness of first layer
- D2: centre thickness of second layer
- B1: first blade position
- B2: second blade position

## Claims

1. A wind turbine blade extending from a root to a tip, the wind turbine blade comprising a root region, and an airfoil region comprising the tip, a pressure side, a suction side and a chord line extending between a leading edge and a trailing edge, the wind turbine blade comprising a leading edge protection element,
wherein the leading edge protection element is arranged at the leading edge of the wind turbine blade so as to form an exterior surface at the leading edge of the wind turbine blade, wherein the leading edge protection element comprises:
- a first layer made of a first material provided with an added pigment material, wherein the added pigment material has a first content by weight defined as the weight of the added pigment material divided by the weight of the first layer, and
- at least one second layer made of a second material provided with or without an added pigment material, wherein the added pigment material has a second content by weight defined as the weight of the added pigment material divided by the weight of the at least one second layer,
wherein the second content by weight is smaller than the first content by weight, and
wherein the at least one second layer is arranged nearer the exterior surface of the blade than the first layer.

2. Wind turbine blade according to claim 1, wherein the first layer is an innermost layer of the leading edge protection element.

3. Wind turbine blade according to any of the preceding claims, wherein the first content by weight is 0.1-10% by weight, such as 0.5-5% by weight, such as 1-2% by weight.

4. Wind turbine blade according to any of the preceding claims, wherein the second content by weight is less than 1% by weight, such as 0% by weight.

5. Wind turbine blade according to any of the preceding claims, wherein the first layer and/or the at least one second layer are made of a thermoplastic material.

6. Wind turbine blade according to any of the preceding claims, wherein the first layer and/or the at least one second layer are formed as a co-extruded element.

7. Wind turbine blade according to any of the preceding claims, wherein the first layer and/or the at least one second layer are made of an elastomer material, such as a thermoplastic polymer material, e.g., a thermoplastic polyurethane material.

8. Wind turbine blade according to any of the preceding claims wherein the leading edge protection element comprises a plurality of second layers, such as 2-10, such as 2-8, such as 2 or 3 second layers.

9. Wind turbine blade according to any of the preceding claims, wherein the first layer has a first centre thickness, preferably at the leading edge of the blade, and wherein said first centre thickness is between 100-500 µm, such as between 150-300 µm, such as 250 µm, and wherein each of the plurality of the second layers has a second centre thickness, preferably at the leading edge of the blade, and wherein said second centre thickness is between 100-500 µm, such as between 150-300 µm, such as 250 µm.

10. Wind turbine blade according to any of the preceding claims, wherein the first layer and/or the at least one second layer have a Shore A hardness between 75-120, such as between 80-100, such as between 85-98.

11. A method for manufacturing a leading edge protection element for a wind turbine blade, the method comprising:
- providing a first layer made of a first material provided with an added pigment material, wherein the added pigment material has a first content by weight defined as the weight of the added pigment material divided by the weight of the first layer,
- providing at least one second layer made of a second material provided with or without an added pigment material, wherein the added pigment material has a second content by weight defined as the weight of the added pigment material divided by the weight of the at least one second layer,
wherein the second content by weight is smaller than the first content by weight, and
wherein the first layer and/or the at least one second layer is manufactured using an extrusion process,
the method further comprising:
- bonding the first layer and the at least one second layer using heat.

12. Method according to claim 11, wherein the first layer and the at least one second layer are co-extruded.

13. A method for protecting a leading edge of a wind turbine blade,
wherein the wind turbine blade extends from a root to a tip, and comprising a root region, and an airfoil region comprising the tip, a pressure side, a suction side and a chord line extending between the leading edge and a trailing edge,
the method comprising:
- providing a wind turbine blade,
- providing a leading edge protection element having the characteristics of any of the claims 1-10,
- bonding the leading edge protection element to the leading edge of the wind turbine blade.

14. Method according to claim 13, wherein the leading edge protection element is bonded to at least a blade shell part of the wind turbine blade using co-infusion.

15. A leading edge protection element configured to be arranged at a leading edge of a wind turbine blade so as to form an exterior surface of the leading edge of the wind turbine blade, wherein the leading edge element comprises:
- a first layer made of a first material provided with an added pigment material, wherein the added pigment material has a first content by weight defined as the weight of the added pigment material divided by the weight of the first layer, and
- at least one second layer made of a second material provided with or without an added pigment material, wherein the added pigment material has a second content by weight defined as the weight of the added pigment material divided by the weight of the at least one second layer,
wherein the second content by weight is smaller than the first content by weight, and
wherein the at least one second layer is configured to be arranged nearer the exterior surface of the blade than the first layer.
